# EUROPÄISCHE PATENTSCHRIFT

(11) **EP 3 724 049 B1**
(45) Veröffentlichungstag und Bekanntmachung des Hinweises auf die Patenterteilung: **09.02.2022**
(21) Anmeldenummer: 18830216.0
(22) Anmeldetag: 17.12.2018
(51) Int. Cl.: B60T 15/02, B60T 15/30, B60T 15/42

(54) **BESCHLEUNIGUNGSVENTIL FÜR SELBSTTÄTIGE DRUCKLUFTBREMSEN VON SCHIENENFAHRZEUGEN**
ACCELERATION VALVE FOR AUTOMATIC COMPRESSED AIR BRAKES OF RAIL VEHICLES
VALVE D'ACCÉLÉRATION POUR FREINS À AIR COMPRIMÉ AUTOMATIQUES DE VÉHICULES FERROVIAIRES

(30) Priorität: 15.12.2017 DE 102017222978; 02.02.2018 DE 102018201655
(43) Veröffentlichungstag der Anmeldung: 21.10.2020
(73) Patentinhaber: KNORR-BREMSE Systeme für Schienenfahrzeuge GmbH, 80809 München (DE)
(72) Erfinder: HELLER, Martin, 85716 Unterschleißheim (DE); LUND, Karsten, 24306 Plön (DE); PETTER, Thomas, 80336 München (DE); SONNTAG, Stefan, 82024 Taufkirchen (DE)
(86) Internationale Anmeldenummer: PCT/EP2018/085352
(87) Internationale Veröffentlichungsnummer: WO 2019/115838

(56) Entgegenhaltungen:
- CH-A- 345 030
- DE-A1- 1 455 309

## Beschreibung

Die vorliegende Erfindung betrifft ein Beschleunigungsventil für selbsttätige Druckluftbremsen von Schienenfahrzeugen.

Schienenfahrzeuge haben meist eine selbsttätige (automatische) Druckluftbremse, bei der die Absenkung eines bestehenden Drucks in einer über die gesamte Zuglänge verlaufenden Hauptluftleitung, ausgehend von einem Regelbetriebsdruck, die Ausbildung eines Bremszylinderdruckes hervorruft. Die Übertragungsfunktion vom sinkenden Druck in der Hauptluftleitung zum steigenden Bremszylinderdruck und umgekehrt wird von Steuerventilen realisiert.

Da insbesondere bei langen Zügen die Druckabsenkung in der Hauptluftleitung sich nicht ausreichend schnell über die gesamte Zuglänge ausbreitet, sind Beschleunigungseinrichtungen entwickelt worden, welche bei Beginn einer Bremsung zusätzliche Entlüftungsöffnungen der Hauptluftleitung freigegeben, um eine beschleunigte Entlüftung der Hauptluftleitung zu realisieren.

Derartige Beschleunigungseinrichtungen, insbesondere Beschleunigungsventile, sind grundsätzlich bekannt. So offenbaren die Patentschriften DE 21 65 092 B und DE 21 65 144 B Steuerventile mit einer Beschleunigungseinrichtung, welche aufgrund des Unterschieds eines Drucks in der Hauptluftleitung zu einem Druck in einer Steuerkammer geöffnet wird. Zur Öffnung der Beschleunigungseinrichtung wird mechanisch ein Ventilteller angehoben, wodurch eine fluidische Verbindung der Hauptluftleitung durch eine Steuerhülse zur Atmosphäre zur beschleunigten Entlüftung der Hauptluftleitung geschaffen wird. Die Steuerhülse selbst ist in Richtung des Ventiltellers durch eine Feder belastet und mittels eines Arretierstiftes kraftschlüssig arretiert.

Ist die beschleunigte Entlüftung ausreichend erfolgt, gibt der Arretierstift die Steuerhülse frei, wodurch diese durch die Feder in Richtung des Ventiltellers getrieben wird und wieder mit diesem in Kontakt tritt, wodurch das Beschleunigungsventil wieder verschlossen ist. Die Federkraft sorgt bei gelöster Arretierung also für die Dichtigkeit des Ventils.

Ein Nachteil dieser Ausführung ist jedoch, dass die kraftschlüssige Arretierung durch den Arretierstift eine hohe Anpresskraft auf die Steuerhülse erfordert, um diese sicher in ihrer Bereitschaftstellung zu halten. So besteht die Gefahr, dass die Arretierung der Steuerhülse bei Stößen im Fahrbetrieb gelöst werden kann, wodurch bei einer stattfindenden beschleunigten Entlüftung der Hauptluftleitung ein zu frühzeitiges Schließen der Beschleunigungseinrichtung erfolgen könnte. Außerdem entsteht der Nachteil, dass die die Anpresskraft erzeugenden Organe entsprechend aufwändig ausgeführt werden müssen.

Aus der DE 14 55 309 A1 ist ein Steuerventil für eine druckmittelbetätige Bremseinrichtung bekannt.

Schließlich ist aus der CH 345 030 A eine Steuereinrichtung mit Dreidrucksteuerventil an Druckluftbremsen, insbesondere für Schienenfahrzeuge, bekannt.

Es ist Aufgabe der vorliegenden Erfindung, ein Beschleunigungsventil zur Verfügung zu stellen, das ein definiertes, sicheres und wenig aufwändiges Beenden des Beschleunigungsvorganges erlaubt, wobei insbesondere die Arretierung der Steuerhülse verbessert wird.

Diese Aufgabe wird mittels der unabhängigen Ansprüche gelöst. Vorteilhafte Weiterbildungen sind Gegenstand der Unteransprüche.

Erfindungsgemäß ist ein Ventil, insbesondere ein Beschleunigungsventil, zur Herstellung und Unterbrechung einer fluidischen Verbindung einer Hauptluftleitung mit der Atmosphäre vorgesehen, wobei das Ventil ein Gehäuse mit einer Eintrittsöffnung und einer Austrittsöffnung, die fluidisch miteinander in Verbindung stehen, aufweist.

Das Ventil weist ein erstes Ventilelement, das dazu ausgebildet ist, die fluidische Verbindung zwischen der Eintrittsöffnung und der Austrittsöffnung herzustellen oder zu unterbrechen, und ein zweites Ventilelement, das dazu ausgebildet ist, mit dem ersten Ventilelement zur Unterbrechung der fluidischen Verbindung dichtend in Kontakt zu treten, auf.

Ferner ist eine Betätigungsrichtung vorgesehen, zu der sich Ventilelemente parallel bewegen, um das Ventil zu öffnen, oder zu schließen. Die Betätigungsrichtung ist vorzugsweise als gekrümmte Trajektorie, besonders bevorzugt als Gerade ausgeführt und weist von dem zweiten Ventilelement zum ersten Ventilelement.

Weiterhin ist ein Arretierelement vorgesehen, das dazu ausgebildet ist, das zweite Ventilelement bis zu einer Lösebedingung in einer Bereitschaftsstellung zu arretieren Durch die Arretierung wird vorteilhafterweise erreicht, dass das zweite Ventilelement daran gehindert wird, zur Unzeit mit dem ersten Ventilelement in Kontakt zu treten, wodurch eine zu frühzeitige Unterbrechung der fluidische Verbindung des Ventils verhindert wird. Dabei stellt die Ausbildung der Arretierung sicher, dass die Arretierung des zweiten Ventilelements robust gegenüber Stößen aus dem Fahrbetrieb ist.

Vorzugsweise ist die Lösebedingung ein Überschreiten eines vorbestimmten Druckes einer Bremsleitung oder eines Bremszylinders oder ein Überschreiten einer vorbestimmten Druckdifferenz zwischen der Hauptluftleitung und der Steuerkammer. Alternativ kann die Lösebedingung auch ein Unterschreiten eines vorbestimmten Druckes eines Bremszylinders sein.

Vorzugsweise ist das Arretierelement dazu ausgebildet, das zweite Ventilelement kraftschlüssig zu arretieren und in mindestens einer Richtung parallel zur Betätigungsrichtung zu blockieren, so dass keine Verschiebung des zweiten Ventilelements über die blockierte Position hinaus möglich ist. Dadurch kann die Sicherheit der Arretierung vorteilhafterweise erhöht werden.

Erfindungsgemäß weist das Arretierelement einen Arretierstift auf, der dazu ausgebildet ist, zur Arretierung mit dem zweiten Ventilelement in Kontakt zu treten.

Der Arretierstift kann dazu vorzugsweise quer, besonders bevorzugt senkrecht, zur Betätigungsrichtung verschoben werden, wobei er mit dem zweiten Ventilelement zur Arretierung, vorzugsweise mit einem Ende, in Kontakt tritt.

Vorzugweise ist das erste Ventilelement parallel zur Betätigungsrichtung verschiebbar vorgesehen, und/oder das erste Ventilelement weist einen Ventilteller auf, der mit einem Ventilsitz des zweiten Ventilelements ein Ventil ausbildet.

Auf diese Weise wird ein einfach zu betätigendes Ventil ausgebildet, welches sich durch Trennung beider Ventilelemente voneinander, insbesondere durch Trennung des Ventiltellers von dem Ventilsitz, öffnen lässt und durch Kontakt beider Ventilelemente schließen lässt.

Vorzugsweise ist das zweite Ventilelement als ein Teil der fluidischen Verbindung ausgebildet und/oder parallel zur Betätigungsrichtung verschiebbar vorgesehen.

Auf diese Weise kann erreicht werden, dass das zweite Ventilelement relativ einfach zur Steuerung, insbesondere zur Herstellung und Unterbrechung der fluidische Verbindung, betätigt werden kann.

Vorzugsweise ist das zweite Ventilelement durch eine elastische Vorspannkraft in Richtung des ersten Ventilelements beaufschlagt.

So wird das zweite Ventilelement vorteilhafterweise stets in Richtung des ersten Ventilelements angetrieben. Das ausgebildete Ventil ist also stets bestrebt, die fluidische Verbindung zwischen Eintrittsöffnung und Austrittsöffnung zu unterbrechen.

Erfindungsgemäß weist das zweite Ventilelement eine Steuerhülse auf, die einen Teil der fluidischen Verbindung zwischen der Eintrittsöffnung und der Austrittsöffnung bildet. Die Steuerhülse weist vorzugweise in ihrem Inneren Elemente zur Kontrolle der Durchströmung, besonders bevorzugt eine Düse, auf.

Die Steuerhülse wird bei geöffnetem Ventil erfindungsgemäß als Teil der fluidischen Verbindung zwischen Eintrittsöffnung und Austrittsöffnung durchströmt.

Erfindungsgemäß weist das zweite Ventilelement ein Führungselement auf, das einstückig oder separat mit der Steuerhülse ausgebildet ist, wobei bei separater Ausbildung zwischen Steuerhülse und Führungselement eine Verbindung ausgebildet ist, die eine begrenzte Relativbewegung zwischen Steuerhülse und Führungselement parallel zur Betätigungsrichtung erlaubt.

Eine einstückige Ausbildung von Steuerhülse und Führungselement erlaubt, permanent zwischen beiden Elementen Kräfte zu übertragen.

Bei einer separaten Ausbildung, vorzugsweise mit der oben beschriebenen Verbindung, ist es möglich, Steuerhülse und Führungselement zumindest parallel zur Betätigungsrichtung voneinander zu entkoppeln, wobei lediglich bei Erreichen einer maximalen gegenseitigen Verschiebung eine mechanische Kopplung hergestellt wird. Vorzugsweise ist die Verbindung in Form einer Kombination aus Langloch und Stift, oder in Form einer Kombination aus Anschlag und Gegenstück ausgebildet.

Das Langloch ist dabei vorzugsweise in der Verschiebungsrichtung beider Elemente zueinander orientiert.

In einer Ausführungsform ist der Stift auf der Steuerhülse ausgebildet und das Langloch auf dem Führungselement, in einer anderen Ausführungsform ist das Langloch auf der Steuerhülse ausgebildet und der Stift auf dem Führungselement, wobei jeweils beide ineinander greifen. Die mechanische Kopplung bei Erreichen einer maximalen gegenseitigen Verschiebung besteht, wenn der Stift eines der Enden des Langlochs erreicht hat und daran anstößt.

In einer weiteren Ausführungsform ist mindestens ein Anschlag auf der Steuerhülse und ein entsprechendes Gegenstück auf dem Führungselement ausgebildet, in einer anderen Ausführungsform ist das Gegenstück auf der Steuerhülse und der Anschlag auf dem Führungselement ausgebildet, wobei jeweils beide bei Erreichen einer maximal zulässigen Verschiebung aneinander stoßen, wodurch Steuerhülse und Führungselement miteinander gekoppelt werden.

So wird vorteilhafterweise erreicht, eine Relativbewegung zwischen beiden Elementen, vorzugweise parallel zur Betätigungsrichtung, sicherzustellen, wobei bei Erreichen einer maximalen Relativbewegung beide Elemente miteinander mechanisch gekoppelt sind.

Erfindungsgemäß ist das Führungselement dazu ausgebildet, zur Arretierung mit dem Arretierstift in Kontakt zu treten, und/oder der Arretierstift ist dazu ausgebildet, mit einem Ende mit der Oberfläche des Führungselements in Kontakt zu treten.

So kann dieses Führungselement vorteilhafterweise speziell zur Arretierung des zweiten Ventilelements ausgebildet werden.

Vorzugsweise ist eine Oberfläche des Führungselements so geformt, dass sich ein kraftschlüssiger Kontakt zwischen Arretierungsvorrichtung, insbesondere zwischen deren Arretierstift, und Führungselement ausbildet, wobei zudem das Führungselement durch den Kontakt eine Blockierung vorzugsweise in Betätigungsrichtung erfährt, so dass ein Verschieben über die Blockierung hinaus nicht möglich ist. So wird eine sichere Arretierung des Führungselements ermöglicht.

Vorzugsweise erfolgt der Kontakt dabei durch eine Stirnfläche des Endes und/oder durch einen Teil der Umfangsfläche oder die gesamte Umfangsfläche des Arretierstiftes.

Vorzugsweise ist die Oberfläche des Führungselements zumindest über einen Teil des Umfangs der Oberfläche in Betätigungsrichtung als sich verjüngend ausgebildet, und das Ende des Arretierstiftes ist als korrespondierende Fläche ausgebildet.

Durch die sich verjüngende Oberfläche wird vorteilhafterweise erreicht, dass eine Anpresskraft auf das Ende des Arretierstiftes, das mit der Oberfläche in Kontakt steht, bei einer Bewegung des Führungselements in Richtung des ersten Ventilelements erhöht wird, wodurch die Arretierung bzw. die Kraft aus dem Kontakt erhöht wird.

Vorzugsweise weist die sich verjüngend ausgebildete Oberfläche des Führungselements eine abgeschrägte Fläche auf, oder sie ist konisch ausgebildet.

Das Ende bzw. der Bereich des Arretierstiftes, der dazu ausgebildet ist, mit dieser Oberfläche in Kontakt zu treten, ist entsprechend ausgeformt, so dass vorzugsweise ein vollflächiger Kontakt zwischen der Oberfläche und dem Ende bzw. dem Bereich des Arretierstiftes ausgebildet wird.

Vorzugsweise ist das Führungselement auf einer Feder gelagert, die sich im Gehäuse abstützt, und das Führungselement in Richtung der Steuerhülse mit einer Kraft beaufschlagt.

So wird das Führungselement vorteilhafterweise stets in Richtung des ersten Ventilelements gedrängt.

Vorzugsweise ist bei separater Ausbildung der Steuerhülse und des Führungselements die Steuerhülse auf einer Feder gelagert, die sich im Gehäuse abstützt und die die Steuerhülse mit einer Kraft in Richtung des Ventils, vorzugsweise des ersten Ventilelements, beaufschlagt.

So wird vorteilhafterweise erreicht, dass die Steuerhülse stets in Richtung des ersten Ventilelements angetrieben wird, wodurch sichergestellt wird, dass die Steuerhülse stets bestrebt ist, das Ventil zu schließen, bzw. die fluidische Verbindung zu unterbrechen.

Vorzugsweise ist bei geschlossenem Ventil die Steuerhülse von dem Führungselement durch die oben beschriebene Verbindung mechanisch entkoppelt, so dass die Steuerhülse, insbesondere ihr Ventilsitz, durch die Kraft der Feder auf der die Steuerhülse aufliegt, gegen das erste Ventilelement gedrückt wird, wodurch das Ventil mit einer stärkeren Verschlusskraft beaufschlagt ist.

Vorzugsweise ist der Kontakt zwischen dem ersten und zweiten Ventilelement zur Unterbrechung der fluidischen Verbindung durch mindestens eine zusätzliche Federkraft mindestens einer Feder beaufschlagt, die sich an dem ersten Ventilelement und/oder an dem zweiten Ventilelement direkt oder indirekt abstützt.

Vorteilhafterweise wird so ein sicher dichtendes Ventil ausgebildet, welches robust gegenüber Stößen oder Druckschwankungen ist, und somit eine unerwünschte Öffnung des Ventils und somit eine unerwünschte Entlüftung der Hauptluftleitung an die Atmosphäre vermeidet, oder zumindest erschwert.

Vorzugsweise ist weiterhin ein Aktuator vorgesehen, der dazu ausgebildet ist, das erste Ventilelement zur Herstellung der fluidischen Verbindung aufgrund eines Druckunterschiedes in der Hauptluftleitung und einer Steuerkammer in Betätigungsrichtung weg von dem zweiten Ventilelement zu bewegen.

Somit ist es möglich das Beschleunigungsventil in ein entsprechendes Bremssystem zu integrieren und mit bestehenden Leitungen, wie einer Hauptluftleitung und einem Anschluss für eine Steuerkammer zu verbinden.

Vorzugsweise weist das Ventil mindestens einen Anschlag auf, der dazu ausgebildet ist, die Bewegung des ersten Ventilelements oder des zweiten Ventilelements zu begrenzen. Dabei kann der Anschlag direkt, oder auch über andere Elemente, wie beispielsweise damit verbundenen Kolben, mit dem entsprechenden Ventilelement in Kontakt treten.

Damit kann erreicht werden, dass sich das entsprechende Ventilelement in einer bestimmten Betriebsphase, vorzugsweise in einer Betriebsphase mit gelöster Bremse, in einer definierten Position befindet. Tritt das andere Ventilelement mit diesem Ventilelement in Kontakt, so ist auch dieses in einer definierten Position. Somit befinden sich die Ventilelemente und weitere, damit verbundene Bauteile des Ventils in definierten Positionen, so dass Öffnungs- und Schließhübe stets gleich ausfallen.

In einer weiteren Ausführungsform der Erfindung ist ein Steuerventil für Druckluftbremsen vorgesehen, das eine fluidische Verbindung mit einer Bremsleitung oder mit einem Bremszylinder, eine fluidische Verbindung mit einer Hauptluftleitung, eine fluidische Verbindung mit einer Steuerkammer und eine fluidische Verbindung mit einem Druckspeicher aufweist, wobei das Steuerventil dazu ausgebildet ist, die Bremsleitung oder den Bremszylinder aufgrund eines Druckunterschieds zwischen der Hauptluftleitung und der Steuerkammer mit einer definierten Menge an Druckluft aus dem Druckspeicher zu beaufschlagen, die dem Druckunterschied entspricht. Ein derartiges Ventil ist aus dem Stand der Technik bekannt.

Dieses ist nun erfindungsgemäß durch ein oben beschriebenes Ventil ergänzt, um zur beschleunigten Entlüftung der Hauptluftleitung eine zusätzliche fluidische Verbindung zur Atmosphäre oder einer Entlüftungseinrichtung schaffen zu können.

Das Steuerventil ist also vorteilhafterweise durch ein sicher arretiertes Ventil zur beschleunigten Entlüftung der Hauptluftleitung ergänzt, wodurch ein unerwünschtes Unterbrechen Verbindung der Hauptluftleitung mit der Atmosphäre vermieden oder zumindest erschwert wird.

In einer weiteren Ausführungsform der Erfindung ist ein Schienenfahrzeug mit einer pneumatischen Bremsanlage vorgesehen, die ein oben beschriebenes Steuerventil aufweist.

Die oben beschriebenen Ausführungsformen wirken nicht beschränkend auf den Gegenstand der Erfindung. Vielmehr sind weitere Ausführungsformen denkbar, die durch Kombination mindestens zweier zuvor beschriebener Merkmale erhalten werden können. Zudem sind vorteilhafte Weiterbildungen der Erfindung denkbar, die ebenfalls durch den Schutzbereich dieser Anmeldung abgedeckt sind. So kann beispielsweise eine Entlüftung der Hauptluftleitung auch anstatt an die Atmosphäre, an eine Entlüftungseinrichtung erfolgen, die vorzugsweise als zusätzliche Kammer ausgebildet ist und bei Öffnung des oben beschriebenen Ventils einen Teil der Druckluft aufnimmt und somit zur beschleunigten Entlüftung bzw. zur Drucksenkung der Hauptluftleitung beiträgt.

Im Weiteren erfolgt die Beschreibung bevorzugter Ausführungsbeispiele der Erfindung mithilfe der beigefügten Zeichnungen.

Im Einzelnen zeigt:
Fig. 1 eine erste Ausführungsform des erfindungsgemäßen Ventils,
Fig. 2 eine vorteilhafte Weiterbildung der Ausführungsform aus Fig. 1,
Fig. 3 eine alternative Ausführungsform des erfindungsgemäßen Ventils.

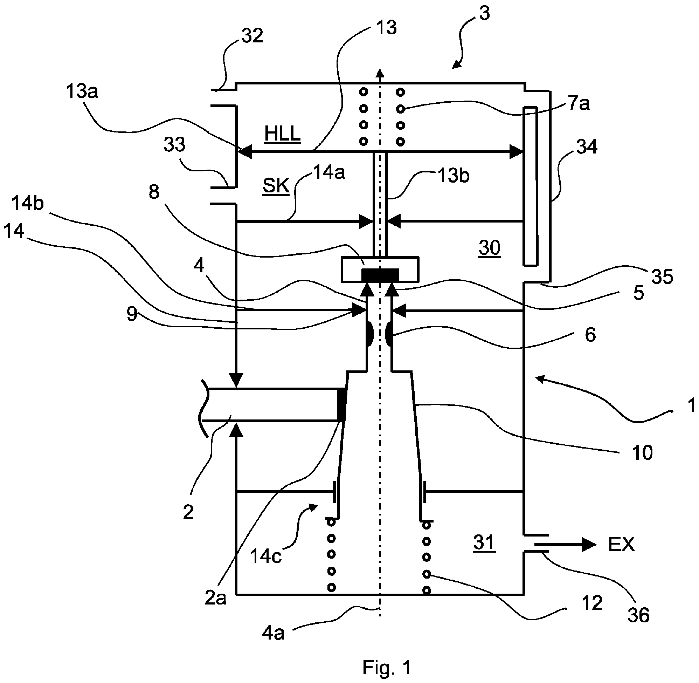

**Fig. 1** zeigt eine erste Ausführungsform des erfindungsgemäßen Ventils 1.

Es ist ein Gehäuse 14 mit einer Eintrittsöffnung 35 und einer Austrittsöffnung 36 gezeigt, wobei die Eintrittsöffnung 35 mit einer Hauptluftleitung HLL und die Austrittsöffnung 36 mit der Atmosphäre EX in Verbindung steht.

Innerhalb des Ventils 1, bzw. des Gehäuses 14, ist ein Ventilteller 8 ausgebildet, welcher mit einem Ventilsitz 5 in Kontakt steht, wodurch eine fluidische Verbindung zwischen der Eintrittsöffnung 35 und der Austrittsöffnung 36 unterbrochen ist.

Der Ventilsitz 5 ist an einem Ende einer Steuerhülse 4 ausgebildet. Die Steuerhülse 4 durchragt dabei eine Trennwand 14b, welche das Gehäuse 14 in zwei Räume 30, 31 unterteilt.

Raum 30 weist dabei die Eintrittsöffnung 35 auf, und steht somit mit der Hauptluftleitung HLL in Verbindung. Raum 31 weist die Austrittsöffnung 36 auf und steht somit mit der Atmosphäre EX in Verbindung.

Die Stelle, an der die Steuerhülse 4 die Trennwand 14b durchragt ist mit einer gleitenden Abdichtung 9 versehen, welche erlaubt, die Steuerhülse 4 in der Zeichnung nach oben und unten zu verschieben, wobei gleichzeitig keine fluidische Verbindung zwischen den Räumen 30, 31 an der Außenseite der Steuerhülse 4 vorbei besteht.

Die einzige fluidische Verbindung zwischen den Räumen 30, 31 kann lediglich durch den Innenraum der Steuerhülse 4 hergestellt werden, welcher beispielsweise zur Regulierung der Durchströmung mit einer Düse 6 versehen ist.

Ferner ist eine Betätigungsrichtung 4a gezeigt, wobei sich die Steuerhülse 4 sowie der Ventilteller 8 parallel zu dieser Betätigungsrichtung 4a bewegen können.

Weiterhin ist ein nach oben konisch zulaufendes, hohles Führungselement 10 gezeigt, welches mittels einer Führung 14c im Gehäuse verschiebbar gelagert ist, wobei dieses Führungselement 10 ebenfalls parallel zur Betätigungsrichtung 4a verschiebbar und mit der Steuerhülse 4 einstückig ausgebildet ist.

Das Führungselement 10 ist auf einer Feder 12 gelagert, welche sich im Gehäuse 14 abstützt und das Führungselement 10 mit einer elastischen Vorspannkraft beaufschlagt, welche in der Zeichnung nach oben wirksam ist. Die Feder 12 treibt also das Führungselement 10 und somit die Steuerhülse 4 nach oben in Richtung des Ventiltellers 8.

Der Ventilteller 8 bildet in dieser Ausführungsform ein erstes Ventilelement. Die Steuerhülse 4 mit dem Ventilsitz 5 und der Düse 6 bildet mit dem Führungselement 10 ein zweites Ventilelement.

Weiterhin ist ein Arretierstift 2 einer Arretiervorrichtung dargestellt. Dieser durchdringt eine Wand des Gehäuses 14 und stößt in der gezeigten Darstellung mit seinem Ende 2a an die Außenfläche des Führungselements 10 an.

Aus der Arretiervorrichtung heraus wird der Arretierstift 2 mit einer Federkraft beaufschlagt, die ihn in der Zeichnung nach rechts antreibt und ihn, insbesondere sein Ende 2a, somit mit dem Führungselement 10 in Kontakt bringt. Das Ende 2a ist dabei so ausgebildet, dass es sich möglichst vollflächig an das Führungselement 10 anlegt. Dabei entsteht ein Kontakt, in dem das Führungselement 10 sowohl kraftschlüssig gehalten wird, als auch in Betätigungsrichtung 4a blockiert wird. Durch die Feder 12 wird das Führungselement 10 nach oben mit einer Kraft beaufschlagt. Diese Kraft stützt sich zum einen kraftschlüssig in dem Kontakt zwischen dem Ende 2a des Arretierstiftes 2 und der Oberfläche des Führungselements 10 ab und wird zudem durch die blockierende Eigenschaft des Endes 2a des Arretierstiftes 2 kompensiert.

Der Arretierstift 2 ist dabei nach links und rechts verschiebbar vorgesehen und gegenüber dem Gehäuse 14 gleitend abgedichtet, sodass Raum 31 nicht durch diese Öffnung entlüften kann.

Der Arretierstift 2 ist nach links in der Zeichnung nicht weiter fortgesetzt dargestellt. Auch auf eine Darstellung der weiteren Arretiervorrichtung wurde aus Gründen der Übersichtlichkeit verzichtet.

Im oberen Teil des Ventils 1 ist ein Aktuator 3 angeordnet. Dieser besteht aus zwei Kammern, welche durch einen Kolben 13 mit gleitender Abdichtung 13a zur Gehäusewand 14 voneinander getrennt sind. Der Kolben 13 ist dabei an seiner Oberseite durch eine Kraft einer Feder 7a, die sich im Gehäuse abstützt, entgegen der Betätigungsrichtung 4a beaufschlagt.

Die obere Kammer steht dabei fluidisch über einen Einlass 32 mit der Hauptluftleitung HLL in Verbindung, die untere Kammer ist als Steuerkammer SK ausgeführt und verfügt über einen Einlass 33, über den sie über eine nicht gezeigte Drosselstelle mit der Hauptluftleitung HLL in Verbindung steht.

Der Kolben 13 verfügt über eine Kolbenstange 13b, welche sich von der Unterseite des Kolbens 13 nach unten erstreckt. Die Kolbenstange 13b durchstößt dabei die untere Gehäusewand 14a der Steuerkammer SK und ist mit der Oberseite des Ventiltellers 8, also der Seite, die der Seite, die mit dem Ventilsitz 5 in Kontakt ist, gegenüber liegt, verbunden.

Ferner kann ein Anschlag (nicht dargestellt) vorgesehen sein, der das System Kolben 13, Kolbenstange 13b und Ventilteller 8, in seiner Bewegung entgegen der Betätigungsrichtung 4a oder auch in Betätigungsrichtung 4a begrenzt, so dass der Kolben 13 nicht beliebig weit nach unten oder oben durch die Feder 7a oder auftretende Druckunterschiede zwischen Hauptluftleitung HLL und Steuerkammer SK verschoben werden kann. Dies hat zur Folge, dass das System bestehend aus Kolben 13, Kolbenstange 13b und Ventilteller 8 und damit auch sämtliche Komponenten des Ventils 1, bei gelöster Bremse eine definierte Grundstellung einnehmen.

Weiterhin ist ein Kanal 34 vorgesehen, welcher eine Verbindung der Eintrittsöffnung 35 mit der oberen Kammer, welche mit der Hauptluftleitung HLL in Verbindung steht, herstellt.

Die Funktionsweise des dargestellten Ventils 1 ist wie folgt.

Zu Beginn sind die Bremsen des Schienenfahrzeugs gelöst, beispielsweise sind die Bremszylinder an die Atmosphäre EX entlüftet und die Hauptluftleitung HLL ist mit einem Druck von 5 bar beaufschlagt. D.h. der Raum über dem Kolben 13 und der Raum 30 sind mit 5 bar beaufschlagt. Gleichzeitig ist auch die Steuerkammer SK über den Einlass 33 mit 5 bar beaufschlagt. Der Raum 31 ist über die Austrittsöffnung 36 an die Atmosphäre EX entlüftet.

Die Komponenten des Ventils 1 nehmen bei gelöster Bremse die in der Zeichnung dargestellten Stellungen ein.

Wird die Bremsung des Schienenfahrzeugs eingeleitet, so wird über ein Führerbremsventil die Hauptluftleitung HLL zentral entlüftet. Dies hat zur Folge, dass der Druck in der Hauptluftleitung HLL zu sinken beginnt. Somit sinkt der Druck im Raum oberhalb des Kolbens 13 und in dem damit über den Kanal 34 verbundenen Raum 30.

Der Druck in der Steuerkammer SK kann aufgrund der zuvor erwähnten Drossel nicht mit derselben Geschwindigkeit wie in der Hauptluftleitung HLL sinken. Die Steuerkammer SK entleert sich somit langsamer als die Hauptluftleitung HLL. Sie ist somit zu diesem Zeitpunkt mit einem höheren Druck als die Hauptluftleitung HLL beaufschlagt.

Dies hat zur Folge, dass sich am Kolben 13 eine Druckdifferenz zwischen Ober- und Unterseite einstellt. Aufgrund dieser Druckdifferenz wird der Kolben 13 in der Zeichnung nach oben bewegt, sobald diese Druckdifferenz ausreicht, die Kraft der Feder 7a zu überwinden.

Infolge dieser Bewegung hebt er den Ventilteller 8 an. Die Steuerhülse 4 kann aufgrund der bestehenden Arretierung des Führungselements 10 durch den Arretierstift 2 der Verschiebung des Ventiltellers 8 nicht folgen und verbleibt in der gezeigten Position.

Infolge dessen hebt sich der Ventilteller 8 vom Ventilsitz 5 der Steuerhülse 4 ab, wodurch nun eine fluidische Verbindung der Eintrittsöffnung 35 mit der Austrittsöffnung 36 hergestellt wird.

Die fluidische Verbindung setzt sich im Einzelnen zusammen aus der Eintrittsöffnung 35, dem Raum 30, dem Ventilsitz 5, dem Inneren der Steuerhülse 4, der Düse 6, dem Inneren des Führungselements 10, dem Raum 31 und der Austrittsöffnung 36.

Raum 30 und somit die damit über den Kanal 34 verbundene Hauptluftleitung HLL ist nun mit der Atmosphäre EX verbunden, wodurch die Entlüftung der Hauptluftleitung HLL beschleunigt erfolgt.

Im weiteren Verlauf der Bremsung wird der Arretierstift 2 aufgrund einer vorbestimmten Bedingung zur Beendigung des Beschleunigungsvorgangs nach links bewegt. Dies kann beispielsweise aufgrund eines ansteigenden Bremsdruckes erfolgen, welcher den Arretierstift 2, beispielsweise durch Beaufschlagung eines mit dem Arretierstift 2 verbundenen Kolbens mit dem ansteigenden Bremszylinderdruck, nach links entgegen der Arretierkraft der Arretiervorrichtung bewegt. Alternativ kann auch das Unterschreiten eines vorbestimmten Bremszylinderdruckes als Lösebedingung vorgesehen sein. Eine andere Möglichkeit den Arretierstift 2 nach links zu bewegen könnte in einem Druckunterschied zwischen Hauptluftleitung HLL und Steuerkammer SK gesehen werden, wobei der Arretierstift 2 aufgrund einer überschrittenen vorbestimmten Druckdifferenz nach links bewegt wird.

Infolge der Bewegung des Arretierstiftes 2 nach links löst sich der Kontakt seines Endes 2a mit dem Führungselement 10. Das Führungselement 10 wird somit nicht mehr durch den Arretierstift 2, insbesondere dessen Ende 2a arretiert.

Dies hat zur Folge, dass sich das Führungselement 10 und die damit verbundene Steuerhülse 4 aufgrund der Kraft der Feder 12 nach oben bewegt.

Der Ventilteller 8 befindet sich immer noch in einer höheren Position als in Fig. 1 dargestellt, da zwischen der Hauptluftleitung HLL und der Steuerkammer SK nach wie vor ein Druckunterschied besteht.

Die Bewegung der Steuerhülse 4 und des Führungselements 10, angetrieben durch die Feder 12, wird so weit nach oben fortgeführt, bis der Ventilsitz 5 der Steuerhülse 4 wieder dichtend mit dem Ventilteller 8 in Kontakt tritt.

Dadurch ist die fluidische Verbindung zwischen der Hauptluftleitung HLL und der Atmosphäre EX wieder unterbrochen, die beschleunigte Entlüftung der Hauptluftleitung HLL ist somit beendet. Die Bremsung wird fortgeführt.

Soll die angelegte Bremse wieder gelöst werden, wird die Hauptluftleitung HLL wieder mit Druckluft bis auf 5 bar beaufschlagt. Dadurch erfolgt eine Angleichung der Drücke in den Räumen ober- und unterhalb des Kolbens 13, also in der Hauptluftleitung HLL und in der Steuerkammer SK.

Dies hat zur Folge, dass sich der Kolben 13 durch die Kraft der Feder 7a wieder nach unten bewegt. Mit dem Kolben 13 bewegt sich der über die Kolbenstange 13b verbundene Ventilteller 8 ebenfalls nach unten.

Dadurch schiebt dieser die Steuerhülse 4, mit der er über den Ventilsitz 5 in Kontakt steht, und das Führungselement 10 entgegen der Kraft der Feder 12 nach unten. Schließlich wird in der Arretiervorrichtung entweder durch den sinkenden Bremszylinderdruck oder durch die sich angleichenden Drücke der Hauptluftleitung HLL und der Steuerkammer SK, die Bedingung für eine Verschiebung des Arretierstiftes 2 nach links widerrufen, wodurch der Arretierstift 2 wieder nach rechts in die in Fig. 1 gezeigte Stellung überführt wird.

Hier trifft das Ende 2a des Arretierstiftes 2 wieder auf die Oberfläche des Führungselements 10 und bildet wieder einen kraftschlüssigen und blockierenden Kontakt aus, wodurch das Führungselement 10 sowie die Steuerhülse 4 wieder in der gezeigten Position arretiert werden.

Der zwischen dem Ende 2a des Arretierstiftes 2 und der Oberfläche des Führungselements 10 ausgebildete Kontakt ermöglicht somit gegenüber einer rein kraftschlüssigen Ausprägung eine sicherere Arretierung des Führungselements 10.

Eine derartige Ausbildung des Beschleunigungsventils 1 ist wesentlich unempfindlicher gegenüber Stößen, welche sich während der Fahrt ereignen können, oder gegenüber auftretenden Druckschwankungen in der Bremsleitung oder zwischen der Hauptluftleitung HLL und der Steuerkammer SK.

Es wird also eine nicht erwünschte Lösung der Arretierung des Führungselements 10 und somit eine nicht erwünschte Schließung des Ventils 5, 8 aufgrund der Kraft der Feder 12 verhindert, oder zumindest erschwert. Somit wird eine unbeabsichtigte Entlüftung der Hauptluftleitung HLL an die Atmosphäre EX vermieden.

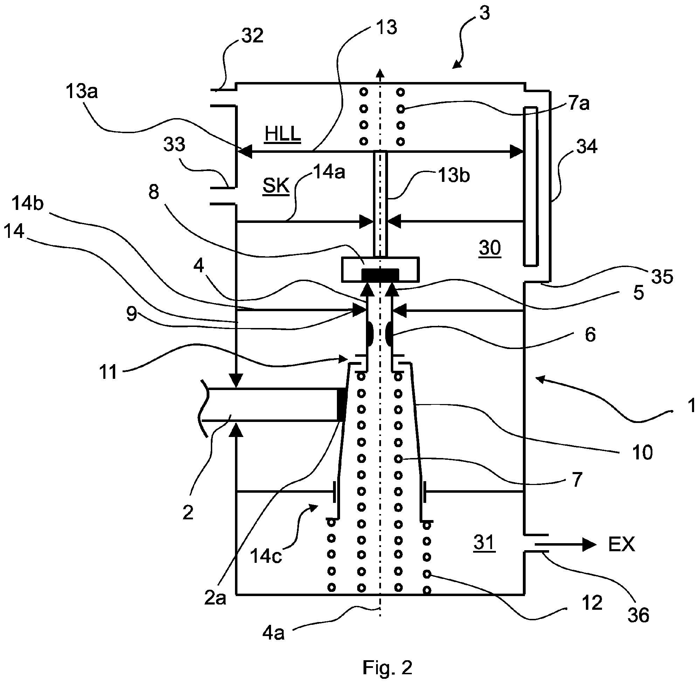

**Fig. 2** zeigt eine vorteilhafte Weiterbildung der Ausführungsform aus Fig. 1.

Der prinzipielle Aufbau dieser Ausführungsform ist im Wesentlichen identisch zu der Ausführungsform aus Fig. 1.

Hier sind jedoch die Steuerhülse 4 und das Führungselement 10 separat ausgebildet, wobei sich das Führungselement 10 nach wie vor auf der Feder 12 abstützt.

Zwischen Führungselement 10 und Steuerhülse 4 ist eine Verbindung 11 ausgebildet, welche es erlaubt, dass sich Steuerhülse 4 und Führungselement 10 parallel zur Betätigungsrichtung 4a gegeneinander bewegen können, wobei bei Erreichen einer vorbestimmten maximalen Verschiebung der Steuerhülse 4 gegenüber dem Führungselement 10 eine weitere Verschiebung darüber hinaus durch die Verbindung 11 blockiert wird.

Eine derartige Verbindung 11 kann beispielsweise als Kombination eines Langlochs, welches parallel zur Betätigungsrichtung 4a orientiert ist, mit einem damit in Eingriff stehenden Stift ausgebildet sein. Dabei kann das Langloch auf der Steuerhülse 4 und der Stift auf dem Führungselement 10, oder das Langloch auf dem Führungselement 10 und der Stift auf der Steuerhülse 4 vorgesehen sein.

Eine andere Ausführungsform dieser Verbindung 11 ist beispielsweise durch die Ausbildung mindestens eines Anschlagselements auf der Steuerhülse 4 und/oder dem Führungselement 10 gegeben, wobei bei einer vorbestimmten maximalen Verschiebung der Steuerhülse 4 gegenüber dem Führungselement 10 das mindestens eine Anschlagselement mit einem Gegenstück des anderen Elements in Kontakt tritt, wodurch die Verschiebung relativ zueinander verhindert wird.

Weiterhin ist eine Feder 7 gezeigt auf der das vom Ventilsitz 5 der Steuerhülse 4 abgewandte Ende ruht. Die Feder 7 stützt sich im Gehäuse 14 ab und beaufschlagt die Steuerhülse 4 mit einer elastischen Vorspannkraft, welche in der Zeichnung nach oben wirksam ist. Die Feder 7 treibt also die Steuerhülse 4 nach oben in Richtung des Ventiltellers 8.

Die Funktionsweise des dargestellten Ventils 1 ist wie folgt.

Zu Beginn sind die Bremsen des Schienenfahrzeugs gelöst, beispielsweise sind die Bremszylinder an die Atmosphäre EX entlüftet und die Hauptluftleitung HLL ist mit einem Druck von 5 bar beaufschlagt. D.h. der Raum über dem Kolben 13 und der Raum 30 sind mit 5 bar beaufschlagt. Gleichzeitig ist auch die Steuerkammer SK über den Einlass 33 mit 5 bar beaufschlagt. Der Raum 31 ist über die Austrittsöffnung 36 an die Atmosphäre EX entlüftet.

Die Komponenten des Ventils 1 nehmen bei gelöster Bremse die in der Zeichnung dargestellten Stellungen ein.

Wird die Bremsung des Schienenfahrzeugs eingeleitet, so wird über ein Führerbremsventils die Hauptluftleitung HLL zentral entlüftet. Dies hat zur Folge, dass der Druck in der Hauptluftleitung zu sinken beginnt. Somit sinkt der Druck im Raum oberhalb des Kolbens 13 und in dem damit über den Kanal 34 verbundenen Raum 30.

Der Druck in der Steuerkammer SK kann aufgrund der zuvor erwähnten Drossel nicht mit derselben Geschwindigkeit wie in der Hauptluftleitung HLL sinken. Die Steuerkammer SK entleert sich somit langsamer als die Hauptluftleitung HLL. Sie ist somit zu diesem Zeitpunkt mit einem höheren Druck als die Hauptluftleitung HLL beaufschlagt.

Dies hat zur Folge dass sich am Kolben 13 eine Druckdifferenz zwischen Ober- und Unterseite einstellt. Aufgrund dieser Druckdifferenz wird der Kolben 13 in der Zeichnung nach oben bewegt, sobald diese Druckdifferenz ausreicht, die Kraft der Feder 7a zu überwinden.

Infolge dieser Bewegung hebt er den Ventilteller 8 an. Die Steuerhülse 4 wird aufgrund der Feder 7 ebenfalls nach oben bewegt, da die Verbindung 11 eine relative Verschiebung zwischen Steuerhülse 4 und Führungselement 10 zulässt. Der Ventilsitz 5 bleibt dabei mit dem Ventilteller 8 in Kontakt.

Ist die durch die Verbindung 11 maximal zulässige Verschiebung zwischen Steuerhülse 4 und Führungselement 10 erreicht, kann die Steuerhülse 4 nicht mehr weiter durch die Feder 7 nach oben verschoben werden, da sie durch das Führungselement 10, welches durch den Arretierstift 2 festgehalten wird, an einer weiteren Verschiebung gehindert wird.

Führt nun der Kolben 13 seine Bewegung nach oben fort, so hebt sich der Ventilteller 8 vom Ventilsitz 5 der Steuerhülse 4 ab, wodurch nun eine fluidische Verbindung der Eintrittsöffnung 35 mit der Austrittsöffnung 36 hergestellt wird.

Die fluidische Verbindung setzt sich im Einzelnen zusammen aus der Eintrittsöffnung 35, dem Raum 30, dem Ventilsitz 5, dem Inneren der Steuerhülse 4, der Düse 6, dem Raum 31 und der Austrittsöffnung 36.

Raum 30 und somit die damit über den Kanal 34 verbundene Hauptluftleitung HLL ist nun mit der Atmosphäre EX verbunden, wodurch die Entlüftung der Hauptluftleitung HLL beschleunigt erfolgt.

Im weiteren Verlauf der Bremsung wird der Arretierstift 2 aufgrund einer vorbestimmten Bedingung zur Beendigung des Beschleunigungsvorgangs nach links bewegt. Dies kann beispielsweise aufgrund eines ansteigenden Bremsdruckes erfolgen, welcher den Arretierstift 2, beispielsweise durch Beaufschlagung eines mit dem Arretierstift 2 verbundenen Kolbens mit dem ansteigenden Bremsdruck, nach links entgegen der Arretierkraft der Arretiervorrichtung bewegt. Eine andere Möglichkeit, den Arretierstift 2 nach links zu bewegen, könnte in einem Druckunterschied zwischen Hauptluftleitung HLL und Steuerkammer SK gesehen werden, wobei der Arretierstift 2 aufgrund einer überschrittenen vorbestimmten Druckdifferenz nach links bewegt wird.

Infolge der Bewegung des Arretierstiftes 2 nach links löst sich der Kontakt seines Endes 2a mit dem Führungselement 10. Das Führungselement 10 wird somit nicht mehr durch den Arretierstift 2, insbesondere dessen Ende 2a, arretiert.

Dies hat zur Folge, dass sich das Führungselement 10 aufgrund der Kraft der Feder 12 nach oben bewegt.

Dadurch wird auch die Steuerhülse 4 nicht mehr länger in ihrer Bewegung nach oben durch das Führungselement 10 blockiert. Die Steuerhülse 4 bewegt sich somit angetrieben durch die Feder 7 nach oben auf den Ventilteller 8 zu.

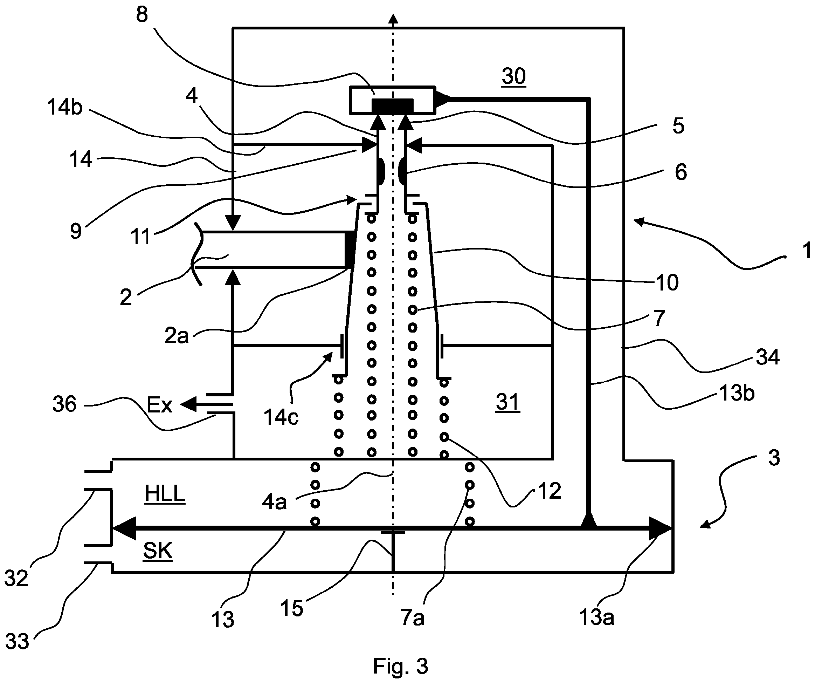

Der Ventilteller 8 befindet sich immer noch in einer höheren Position als in Fig. 3 dargestellt, da zwischen der Hauptluftleitung HLL und der Steuerkammer SK nach wie vor ein Druckunterschied besteht.

Die Bewegung der Steuerhülse 4, angetrieben durch die Feder 7, und des Führungselement 10, angetrieben durch die Feder 12, wird so weit nach oben fortgeführt, bis der Ventilsitz 5 der Steuerhülse 4 wieder dichtend mit dem Ventilteller 8 in Kontakt tritt.

Dadurch ist die fluidische Verbindung zwischen der Hauptluftleitung HLL und der Atmosphäre EX wieder unterbrochen, die beschleunigte Entlüftung der Hauptluftleitung HLL ist somit beendet. Die Bremsung wird fortgeführt.

Soll die angelegte Bremse wieder gelöst werden, wird die Hauptluftleitung HLL wieder mit Druckluft bis auf 5 bar, also Regelbetriebsdruck, beaufschlagt. Dadurch erfolgt eine Angleichung der Drücke in den Räumen ober- und unterhalb des Kolbens 13, also in der Hauptluftleitung HLL und der Steuerkammer SK.

Dies hat zur Folge, dass sich der Kolben 13 durch die Kraft der Feder 7a wieder nach unten bewegt. Mit dem Kolben 13 bewegt sich der über die Kolbenstange 13b verbundene Ventilteller 8 ebenfalls nach unten.

Dadurch schiebt dieser die Steuerhülse 4, mit der er über den Ventilsitz 5 in Kontakt steht, und das Führungselement 10 über die Verbindung 11 entgegen der Kräfte der Federn 7, 12 nach unten.

Das Führungselement 10 wird dabei erst verschoben, wenn sich Steuerhülse 4 und Führungselement 10 maximal zulässig aufeinander zubewegt haben, so dass die Verbindung 11 nun Kräfte der Steuerhülse 4 auf das Führungselement 10 nach unten übertragen kann.

Schließlich wird in der Arretiervorrichtung entweder durch den sinkenden Bremszylinderdruck oder durch die sich angleichenden Drücke der Hauptluftleitung HLL und der Steuerkammer SK, die Bedingung für eine Verschiebung des Arretierstiftes 2 nach links widerrufen, wodurch der Arretierstift 2, beispielsweise durch eine Kraft einer Feder innerhalb der Arretiervorrichtung, wieder nach rechts in die in Fig. 3 gezeigte Stellung überführt wird.

Hier trifft das Ende 2a des Arretierstiftes 2 wieder auf die Oberfläche des Führungselements 10 und bildet wieder einen kraftschlüssigen Kontakt aus, wodurch das Führungselement 10 wieder in der gezeigten Position arretiert wird.

Die Position des Arretierstiftes 2 ist dabei so auf die anderen Elemente des Ventils 1 abgestimmt, dass bei Arretierung des Führungselements 10 durch den Arretierstift 2 keine Kraft des Führungselements 10 auf die Steuerhülse 4 parallel zur Betätigungsrichtung 4a übertragen wird.

Führungselement 10 und Steuerhülse 4 sind nun über die Verbindung 11 parallel zur Betätigungsrichtung 4a entkoppelt.

In dieser Konfiguration wird die Steuerhülse 4 allein durch die Feder 7, unabhängig von der Position des Führungselements 10, nach oben gegen den Ventilteller 8 gedrückt. Die Anordnung ist so gestaltet, dass die Verbindung 11 immer in Betätigungsrichtung 4a überwunden werden muss, bevor das Beschleunigungsventil öffnet, da die Druckfeder 12 das Führungselement 10 im nicht arretierten Zustand immer an den oberen Anschlag der Verbindung 11 anlegt. Diese Eigenschaft führt zu einer größeren Stabilität gegenüber Druckschwankungen in der Hauptluftleitung HLL.

Dadurch steht der Kontakt zwischen Ventilteller 8 und Ventilsitz 5 unter einer von der Arretierung durch den Arretierstift 2 unabhängigen Dichtkraft, welche durch die Feder 7 aufgebracht wird.

Eine derartige Ausbildung des Beschleunigungsventils 1 ist wesentlich unempfindlicher gegenüber Stößen, welche sich während der Fahrt ereignen können, oder gegenüber auftretenden Druckunterschieden zwischen der Hauptluftleitung HLL und der Steuerkammer SK.

Es wird also eine nicht erwünschte Öffnung des Ventils 5, 8 aufgrund der Kraft der Feder 7 verhindert, oder zumindest erschwert. Somit wird eine unbeabsichtigte Entlüftung der Hauptluftleitung HLL an die Atmosphäre EX vermieden.

Zusätzlich wird durch die hier gezeigte Arretierung eine frühzeitige Freigabe des Führungselements 10 und somit eine frühzeitige Beendigung des Beschleunigungsvorgangs vermieden oder zumindest behindert.

Fig. 3 zeigt eine alternative Ausführungsform des erfindungsgemäßen Ventils. Im Gegensatz zu den Ausführungsformen der Fig. 1 und 2 ist hier der Aktuator 3 zur Betätigung des Ventils 1 an dessen Unterseite angeordnet. Der weitere Aufbau entspricht dem aus Fig. 2, daher werden hier lediglich Aufbau und Funktionsweise des Aktuators 3 beschrieben.

Der Aktuator 3 weist einen Raum auf, der über einen Einlass 32 mit der Hauptluftleitung HLL in Verbindung steht. Dieser Raum ist über einen Kanal 34 mit dem ersten Raum 30 des Ventils 1 verbunden. Innerhalb des Aktuators 3 ist ein Kolben 13 vorgesehen, welcher parallel zur Betätigungsrichtung 4a verschiebbar ist. Der Kolben 13 bildet dabei die Unterseite des Raums, der mit der Hauptluftleitung HLL in Verbindung steht und weist eine gleitende Abdichtung 13a auf, welche ein Ausströmen von Druckluft aus diesem Raum verhindert. Ferner wird der Kolben 13 mittels einer Feder 7a mit einer Kraft entgegen der Betätigungsrichtung 4a beaufschlagt. Die Feder 7a stützt sich dabei im Gehäuse des Aktuators 3 ab. Der Kolben 13 weist weiterhin eine Kolbenstange 13b auf, die mit dessen Oberseite verbunden ist und durch den Kanal 34 in den ersten Raum 30 geführt ist. Im ersten Raum 30 ist diese Kolbenstange 13b fest mit dem Ventilteller 8 verbunden. Somit bilden Kolben 13, Kolbenstange 13b und Ventilteller 8 einen einheitlich verschiebbaren Verbund.

Der Aktuator 3 weist einen weiteren Raum auf, der unterhalb des Kolbens 13 angeordnet ist und der als Steuerkammer SK ausgeführt ist. Dieser Raum steht über einen weiteren Einlass 33 und über eine nicht dargestellte Drossel mit der Hauptluftleitung HLL in Verbindung. Innerhalb der Steuerkammer SK ist ein Anschlag 15 vorgesehen, auf dem der Kolben 13 durch die Kraft der Feder 7a zur Auflage kommt. Durch den Anschlag 15 wird das Ventil 1 in die gezeigte Konfiguration überführt, wodurch erreicht wird, dass stets eine definierte Ausgangsstellung der Komponenten bei geschlossenem Ventil 1 vorliegt.

Wird bei einer Bremsung die Hauptluftleitung HLL entlüftet, so beginnt der Druck in der Hauptluftleitung HLL und in der Steuerkammer SK zu sinken. Da jedoch, bedingt durch die Drossel, der Druck in der Steuerkammer SK langsamer sinkt als in der Hauptluftleitung HLL, ist nun die Unterseite des Kolbens 13 mit einem höheren Druck beaufschlagt als die Oberseite. Dadurch wirkt auf den Kolben 13 eine Kraft in Richtung der Betätigungsrichtung 4a. Ist diese Kraft größer als die entgegenwirkende Kraft der Feder 7a, so beginnt sich der Kolben 13 in Betätigungsrichtung 4a zu bewegen, wodurch auch der Ventilteller 8 angehoben wird und die Hauptluftleitung HLL über den Kanal 34, den ersten Raum 30, die Steuerhülse 4, den Führungskörper 10 und den zweiten Raum 31 an die Atmosphäre EX entlüftet wird.

Die hier gezeigten Ausführungsformen wirken nicht beschränkend auf den Gegenstand der Erfindung. Vielmehr sind weitere Ausführungsformen denkbar, welche durch Kombination oder Auslassung einzelner Merkmale aus den gezeigten Ausführungsformen gebildet werden können.

Eine weitere Ausführungsform kann beispielsweise gebildet werden, indem die Kolbenstange 13b keine feste Verbindung mit dem Ventilteller 8 aufweist. Sie ist hier in Form eines Stößels ausgebildet, welcher durch den Kolben 13 bewegt wird und mit einem freien Ende so an den Ventilteller 8, beispielsweise an dessen Unterseite, anstößt, dass sie diesen in Betätigungsrichtung 4a zu bewegen vermag. Wird die Kolbenstange 13b in Betätigungsrichtung 4a bewegt, so hebt sie auch hier den Ventilteller 8 an.

Zusätzlich, oder auch als alternative Ausführungsform, kann auch die Verbindung der Kolbenstange 13b zum Kolben 13 als nicht feste Verbindung ausgeführt sein. Der Kolben 13 tritt mit einem anderen Ende der Kolbenstange 13b, ausgeführt als Stößel, in Kontakt und schiebt diese in Betätigungsrichtung 4a.

In einer weiteren Ausführungsform sind mehrere Kolbenstangen 13b vorgesehen, die beispielsweise in regelmäßiger Anordnung auf einem Kreis um die Betätigungsrichtung angeordnet sind. So sind beispielsweise drei Kolbenstangen 13b denkbar, welche auf einem Kreis im Winkelabstand von 120° um die Betätigungsrichtung 4a angeordnet sind. Die Kolbenstangen 13b können ebenfalls wie oben beschrieben als Stößel ausgebildet sein. Eine derartige Anordnung hat den Vorteil, dass sichergestellt ist, dass die Betätigungskräfte zwischen Kolben 13 und Ventilteller 8 gleichmäßig übertragen werden.

### BEZUGSZEICHENLISTE

- 1: Ventil (Beschleunigungsventil)
- 2: Arretierstift
- 2a: Ende (Arretierstift)
- 3: Aktuator
- 4: Steuerhülse (zweites Ventilelement)
- 4a: Betätigungsrichtung
- 5: Ventilsitz (zweites Ventilelement)
- 6: Düse (zweites Ventilelement)
- 7: Feder
- 7a: Feder
- 8: Ventilteller (erstes Ventilelement)
- 9: gleitende Abdichtung
- 10: Führungselement (zweites Ventilelement)
- 11: Verbindung (zwischen Steuerhülse 4 und Führungselement 10)
- 12: Feder
- 13: Kolben
- 13a: gleitende Abdichtung
- 13b: Kolbenstange
- 14: Gehäuse
- 14a: Gehäusewand
- 14b: Gehäusewand
- 14c: Führung
- 15: Anschlag
- 30: erster Raum
- 31: zweiter Raum
- 32: Einlass (Hauptluftleitung HLL)
- 33: Einlass (Steuerkammer SK)
- 34: Kanal
- 35: Eintrittsöffnung
- 36: Austrittsöffnung
- HLL: Hauptluftleitung
- SK: Steuerkammer

## Patentansprüche

1. Ventil (1), insbesondere Beschleunigungsventil, zur Herstellung und Unterbrechung einer fluidischen Verbindung einer Hauptluftleitung (HLL) mit der Atmosphäre (EX), aufweisend:
- ein Gehäuse (14) mit einer Eintrittsöffnung (35) und einer Austrittsöffnung (36), die fluidisch miteinander in Verbindung stehen,
- eine Betätigungsrichtung (4a),
- ein erstes Ventilelement, das dazu ausgebildet ist, die fluidische Verbindung zwischen der Eintrittsöffnung (35) und der Austrittsöffnung (36) herzustellen oder zu unterbrechen,
- ein zweites Ventilelement, das dazu ausgebildet ist, mit dem ersten Ventilelement zur Unterbrechung der fluidischen Verbindung dichtend in Kontakt zu treten,
- ein Arretierelement, das dazu ausgebildet ist, das zweite Ventilelement bis zu einer Lösebedingung in Bereitschaftsstellung zu arretieren und in mindestens einer Richtung parallel zur Betätigungsrichtung (4a) zu blockieren, wobei
das zweite Ventilelement eine Steuerhülse (4) aufweist, die einen Teil der fluidischen Verbindung zwischen der Eintrittsöffnung (35) und der Austrittsöffnung (36) bildet,
**dadurch gekennzeichnet, dass**
das zweite Ventilelement ein Führungselement (10) aufweist, das einstückig oder separat mit der Steuerhülse (4) ausgebildet ist, wobei
bei separater Ausbildung zwischen Steuerhülse (4) und Führungselement (10) eine Verbindung (11) ausgebildet ist, die eine begrenzte Relativbewegung zwischen Steuerhülse (4) und Führungselement (10) parallel zur Betätigungsrichtung (4a) erlaubt, **und dass**
das Arretierelement einen Arretierstift (2) aufweist, der dazu ausgebildet ist, zur Arretierung mit dem zweiten Ventilelement in Kontakt zu treten, wobei
der Arretierstift (2) mit einer Federkraft beaufschlagt ist, die ihn mit dem Führungselement (10) in Kontakt bringt.

2. Ventil (1) nach Anspruch 1, wobei
das Arretierelement dazu ausgebildet ist, das zweite Ventilelement kraftschlüssig zu arretieren.

3. Ventil (1) nach einem der vorangegangenen Ansprüche, wobei
das erste Ventilelement verschiebbar parallel zur Betätigungsrichtung (4a) vorgesehen ist, und/oder
einen Ventilteller (8) aufweist, der mit einem Ventilsitz (5) des zweiten Ventilelements ein Ventil (5, 8) ausbildet.

4. Ventil (1) nach einem der vorangegangenen Ansprüche, wobei
das zweite Ventilelement als ein Teil der fluidischen Verbindung ausgebildet ist, und/oder
parallel zur Betätigungsrichtung (4a) verschiebbar vorgesehen ist, und/oder
durch eine elastische Vorspannkraft in Richtung des ersten Ventilelements beaufschlagt ist.

5. Ventil (1) nach einem der vorangegangenen Ansprüche, wobei
die Verbindung (11) in Form einer Kombination aus Langloch und Stift, oder
in Form einer Kombination aus Anschlag und Gegenstück ausgebildet ist.

6. Ventil (1) nach einem der vorangegangenen Ansprüche, wobei
das Führungselement (10) dazu ausgebildet ist, zur Arretierung mit dem Arretierstift (2) in Kontakt zu treten, und/oder
der Arretierstift (2) dazu ausgebildet ist, mit einem Ende (2a) mit der Oberfläche des Führungselements (10) in Kontakt zu treten.

7. Ventil (1) nach einem der vorangegangenen Ansprüche, wobei
eine Oberfläche des Führungselements (10) so geformt ist, dass sich ein kraftschlüssiger und das Führungselement (10) in mindestens eine Richtung parallel zur Betätigungsrichtung (4a) blockierender Kontakt zwischen Arretierungsvorrichtung und Führungselement (10) ausbildet.

8. Ventil (1) nach Anspruch 7, wobei
die Oberfläche des Führungselements (10) zumindest über einen Teil des Umfangs der Oberfläche in Betätigungsrichtung (4a) sich verjüngend ausgebildet ist, und
das Ende des Arretierstiftes (2a) derart ausgebildet ist, um mit dieser Oberfläche vollflächig in Kontakt zu treten.

9. Ventil (1) nach Anspruch 8, wobei
die sich verjüngend ausgebildete Oberfläche des Führungselements (10) eine abgeschrägte Fläche aufweist, oder konisch ausgebildet ist, und
das Ende des Arretierstiftes (2a) entsprechend ausgeformt ist.

10. Ventil (1) nach einem der vorangegangenen Ansprüche, wobei
das Führungselement (10) auf einer Feder (12) gelagert ist, die sich im Gehäuse (14) abstützt und das Führungselement (10) in Richtung der Steuerhülse (4) mit einer Kraft beaufschlagt.

11. Ventil (1) nach einem der vorangegangenen Ansprüche, wobei
bei separater Ausbildung der Steuerhülse (4) und des Führungselements (10) die Steuerhülse (4) auf einer Feder (7) gelagert ist, die sich im Gehäuse (14) abstützt und die die Steuerhülse (4) mit einer Kraft in Richtung des Ventils (5, 8) beaufschlagt.

12. Ventil (1) nach einem der vorangegangenen Ansprüche, wobei
der Kontakt zwischen dem ersten und zweiten Ventilelement zur Unterbrechung der fluidischen Verbindung durch mindestens eine zusätzliche Federkraft mindestens einer Feder (7, 7a) beaufschlagt ist, die sich an dem ersten Ventilelement und/oder an dem zweiten Ventilelement direkt oder indirekt abstützt.

13. Ventil (1) nach einem der vorangegangenen Ansprüche, weiterhin aufweisend:
- einen Aktuator (3), der dazu ausgebildet ist, das erste Ventilelement zur Herstellung der fluidischen Verbindung aufgrund eines Druckunterschiedes in der Hauptluftleitung (HLL) und einer Steuerkammer (SK) parallel zur Betätigungsrichtung (4a) zu bewegen.

14. Ventil (1) nach einem der vorangegangenen Ansprüche, aufweisend:
- mindestens einen Anschlag (15), der dazu ausgebildet ist, die Bewegung des ersten Ventilelements oder des zweiten Ventilelements zu begrenzen.

15. Steuerventil für Druckluftbremsen, aufweisend:
- eine fluidische Verbindung mit einer Bremsleitung oder mit einem Bremszylinder,
- eine fluidische Verbindung mit einer Hauptluftleitung (HLL),
- eine fluidische Verbindung mit einer Steuerkammer (SK),
- eine fluidische Verbindung mit einem Druckspeicher, wobei
das Steuerventil dazu ausgebildet ist, die Bremsleitung oder den Bremszylinder aufgrund eines Druckunterschieds zwischen der Hauptluftleitung (HLL) und der Steuerkammer (SK) mit einer definierten Menge an Druckluft aus dem Druckspeicher zu beaufschlagen, die dem Druckunterschied entspricht,
**dadurch gekennzeichnet, dass**
zur beschleunigten Entlüftung der Hauptluftleitung (HLL) ein Ventil (1) nach einem der Ansprüche 1 bis 14 vorgesehen ist.

16. Schienenfahrzeug, aufweisend eine pneumatische Bremsanlage mit einem Steuerventil nach Anspruch 15.

## Claims

1. Valve (1), in particular acceleration valve, for establishing and interrupting a fluidic connection of a main air line (HLL) to the atmosphere (EX), having:
- a housing (14) with an inlet opening (35) and an outlet opening (36) which are fluidically connected to each other,
- an actuation direction (4a),
- a first valve element which is configured to establish or interrupt the fluidic connection between the inlet opening (35) and the outlet opening (36),
- a second valve element which is configured to come into sealing contact with the first valve element in order to interrupt the fluidic connection,
- a locking element which is configured to lock the second valve element in a standby position and to block said valve element in at least one direction parallel to the actuation direction (4a) until a release condition is met, wherein
the second valve element has a control sleeve (4) which forms a part of the fluidic connection between the inlet opening (35) and the outlet opening (36),
**characterised in that**
the second valve element has a guide element (10) which is formed integrally with or separately from the control sleeve (4), wherein
when configured separately, a connection (11) is formed between the control sleeve (4) and the guide element (10) which allows a limited relative movement between the control sleeve (4) and the guide element (10) parallel to the actuation direction (4a),
and
the locking element has a locking pin (2) which is configured to come into contact with the second valve element for locking purposes,
the locking pin (2) is loaded with a spring force which brings it into contact with the guide element (10).

2. Valve (1) according to claim 1, wherein
the locking element is configured to lock the second valve element by force fit.

3. Valve (1) according to one of the preceding claims, wherein
the first valve element is provided so as to be movable parallel to the actuation direction (4a), and/or
has a valve disc (8) which, together with a valve seat (5) of the second valve element, forms a valve (5, 8).

4. Valve (1) according to one of the preceding claims, wherein
the second valve element is configured as part of the fluidic connection, and/or
is provided so as to be movable parallel to the actuation direction (4a), and/or
is loaded in the direction of the first valve element by an elastic preload force.

5. Valve (1) according to one of the preceding claims, wherein
the connection (11) is formed as a combination of a slot and a pin, or
as a combination of a stop and a counter-piece.

6. Valve (1) according to one of the preceding claims, wherein
the guide element (10) is configured to come into contact with the locking pin (2) for locking purposes, and/or
the locking pin (2) is configured such that one end (2a) comes into contact with the surface of the guide element (10).

7. Valve (1) according to one of the preceding claims, wherein
a surface of the guide element (10) is formed so that a force-fit contact is produced between the locking device and the guide element (10), which blocks the guide element (10) in at least one direction parallel to the actuation direction (4a).

8. Valve (1) according to claim 7, wherein
the surface of the guide element (10) is formed tapering in the actuation direction (4a) at least over part of the periphery of the surface, and
the end of the locking pin (2a) is configured so as to come into contact with the surface over the whole face.

9. Valve (1) according to claim 8, wherein
the tapering surface of the guide element (10) has a chamfered face or is conical in form, and
the end of the locking pin (2a) is shaped correspondingly.

10. Valve (1) according to one of the preceding claims, wherein
the guide element (10) is mounted on a spring (12) which is supported in the housing (14) and loads the guide element (10) with a force in the direction of the control sleeve (4).

11. Valve (1) according to one of the preceding claims, wherein
when the control sleeve (4) and guide element (10) are formed separately, the control sleeve (4) is mounted on a spring (7) which is supported in the housing (14) and loads the control sleeve (4) with a force in the direction of the valve (5, 8).

12. Valve (1) according to one of the preceding claims, wherein
the contact between the first and second valve elements is loaded, in order to interrupt the fluidic connection, by at least one additional spring force of at least one spring (7, 7a) which is supported directly or indirectly on the first valve element and/or on the second valve element.

13. Valve (1) according to one of the preceding claims, further having:
- an actuator (3) which is configured, in order to create the fluidic connection, to move the first valve element parallel to the actuation direction (4a) due to a pressure difference between the main air line (HLL) and a control chamber (SK).

14. Valve (1) according to one of the preceding claims, having:
- at least one stop (15) which is configured to limit the movement of the first valve element or second valve element.

15. Control valve for compressed air brakes, having:
- a fluidic connection to a brake line or brake cylinder,
- a fluidic connection to a main air line (HLL),
- a fluidic connection to a control chamber (SK),
- a fluidic connection to a pressure accumulator, wherein
the control valve is configured to load the brake line or the brake cylinder, due to a pressure difference between the main air line (HLL) and the control chamber (SK), with a defined quantity of compressed air from the pressure accumulator which corresponds to the pressure difference,
**characterised in that**
for accelerated venting of the main air line (HLL), a valve (1) according to one of claims 1 to 14 is provided.

16. A rail vehicle having a pneumatic brake system with a control valve according to claim 15.

## Revendications

1. Valve (1), notamment valve d'accélération, pour ménager et interrompre une communication fluidique d'un conduit (HLL) d'air principal avec l'atmosphère (EX), comportant :
- un boîtier (14) ayant une ouverture (35) d'entrée et une ouverture (36) de sortie, qui sont en communication fluidique l'une avec l'autre,
- une direction (4a) d'actionnement,
- un premier élément de valve, qui est constitué pour ménager ou pour interrompre la communication fluidique entre l'ouverture (35) d'entrée et l'ouverture (36) de sortie,
- un deuxième élément de valve, qui est constitué pour entrer en contact d'une manière étanche avec le premier élément de valve pour l'interruption de la communication fluidique,
- un élément d'arrêt, qui est constitué pour arrêter le deuxième élément de valve jusqu'à une condition de desserrage dans une position de disponibilité et pour le bloquer dans au moins une direction parallèle à la direction (4a) d'actionnement, dans lequel
le deuxième élément de valve a un manchon (4) de commande, qui forme une partie de la communication fluidique entre l'ouverture (35) d'entrée et l'ouverture (36) de sortie,
**caractérisé en ce que**
le deuxième élément de valve a un élément (10) de guidage, qui est constitué d'une seule pièce avec le manchon (4) de commande ou d'une manière distincte de celui-ci, dans lequel
si la constitution entre le manchon (4) de commande et l'élément (10) de guidage est distincte, il est constitué une liaison (11), qui permet un déplacement relatif limité entre le manchon (4) de commande et l'élément (10) de guidage parallèlement à la direction (4a) d'actionnement,
et **en ce que**
l'élément d'arrêt a une goupille (2) d'arrêt, qui est constituée pour entrer pour l'arrêt en contact avec le deuxième élément de valve, dans lequel
la goupille (2) d'arrêt est soumise à une force de ressort, qui la met en contact avec l'élément (10) de guidage.

2. Valve (1) suivant la revendication 1, dans laquelle
l'élément d'arrêt est constitué pour arrêter à coopération de force le deuxième élément de valve.

3. Valve (1) suivant l'une des revendications précédentes, dans laquelle
le premier élément de valve est prévu de manière à pouvoir coulisser parallèlement à la direction (4a) d'actionnement, et/ou
a un plateau (8) de valve, qui constitue une valve (5, 8) avec un siège (5) de valve du deuxième élément de valve.

4. Valve (1) suivant l'une des revendications précédentes, dans laquelle
le deuxième élément de valve est constitué sous la forme d'une partie de la communication fluidique, et/ou
est prévu de manière à pouvoir coulisser parallèlement à la direction (4a) d'actionnement, et/ou
est soumis à une force élastique de précontrainte en direction du premier élément de valve.

5. Valve (1) suivant l'une des revendications précédentes, dans laquelle
la liaison (11) est constituée sous la forme d'une combinaison à tenon et mortaise ou sous la forme d'une combinaison d'une butée et d'une pièce antagoniste.

6. Valve (1) suivant l'une des revendications précédentes, dans laquelle
l'élément (10) de guidage est constitué pour entrer pour l'arrêt en contact avec la goupille (2) d'arrêt, et/ou
la goupille (2) d'arrêt est constituée pour entrer en contact par une extrémité (2a) avec la surface de l'élément (10) de guidage.

7. Valve (1) suivant l'une des revendications précédentes, dans laquelle
une surface de l'élément (10) de guidage est conformée de manière à constituer un contact, à coopération de force et bloquant l'élément (10) de guidage dans au moins une direction parallèle à la direction (4a) d'actionnement, entre un système d'arrêt et l'élément (10) de guidage.

8. Valve (1) suivant la revendication 7, dans laquelle
la surface de l'élément (10) de guidage se rétrécit au moins sur une partie du pourtour de la surface dans la direction (4a) d'actionnement, et
l'extrémité de la goupille (2a) d'arrêt est constituée de manière à entrer en contact à pleine surface avec cette surface.

9. Valve (1) suivant la revendication 8, dans laquelle
la surface rétrécissant de l'élément (10) de guidage a une surface biseautée ou est constituée de manière conique, et
l'extrémité de la goupille (2a) d'arrêt est conformée de manière correspondante.

10. Valve (1) suivant l'une des revendications précédentes, dans laquelle
l'élément (10) de guidage est monté sur un ressort (12), qui s'appuie dans le boîtier (14) et l'élément (10) de guidage est soumis à une force en direction du manchon (4) de commande.

11. Valve (1) suivant l'une des revendications précédentes, dans laquelle
lorsque le manchon (4) de commande et l'élément (10) de guidage sont de constitution distincte, le manchon (4) de commande est monté sur un ressort (7), qui s'appuie dans le boîtier (14) et qui applique au manchon (4) de commande une force en direction de la valve (5, 8) .

12. Valve (1) suivant l'une des revendications précédentes, dans laquelle
le contact entre le premier et le deuxième élément de valve pour l'interruption de la communication fluidique est donné par au moins une force supplémentaire d'au moins un ressort (7, 7a), qui s'appuie directement ou indirectement sur le premier élément de valve et/ou sur le deuxième élément de valve.

13. Valve (1) suivant l'une des revendications précédentes, comportant en outre :
- un actionneur (3), qui est constitué pour déplacer parallèlement à la direction (4a) d'actionnement le premier élément de valve pour ménager la communication fluidique en raison d'une différence de pression entre le conduit (HLL) d'air principal et une chambre (SK) de commande.

14. Valve (1) suivant l'une des revendications précédentes, comportant :
- au moins une butée (15), qui est constituée pour limiter le déplacement du premier élément de valve ou du deuxième élément de valve.

15. Valve de commande de freins à air comprimé, comportant :
- une communication fluidique avec un conduit de frein ou avec un cylindre de frein,
- une communication fluidique avec un conduit (HLL) d'air principal,
- une communication fluidique avec une chambre (SK) de commande,
- une communication fluidique avec un accumulateur de pression, dans laquelle
la valve de commande est constituée pour alimenter le conduit de frein ou le cylindre de frein, en raison d'une différence de pression entre le conduit (HLL) d'air principal et la chambre (SK) de commande, en une quantité définie d'air comprimé provenant de l'accumulateur de pression, qui correspond à la différence de pression,
**caractérisée en ce que**
pour la mise à l'atmosphère accélérée du conduit (HLL) d'air principal, il est prévu une valve (1) suivant l'une des revendications 1 à 14.

16. Véhicule ferroviaire, comportant un système pneumatique de frein ayant une valve de commande suivant la revendication 15.
